# EUROPEAN PATENT APPLICATION

(11) **EP 4 692 909 A1**
(43) Date of publication of application: **11.02.2026**
(21) Application number: 24780801.7
(22) Date of filing: 29.03.2024
(51) Int. Cl.: G02C 7/02, G02B 5/26, G02B 5/28, G02C 7/10

(54) **EYEGLASS LENS AND EYEGLASSES**

(30) Priority: 31.03.2023 JP 2023058744
(71) Applicant: Hoya Lens Thailand Ltd., Pathumthani 12130 (TH)
(72) Inventor: TAKAHASHI Kazunori, Tokyo 160-8347 (JP)
(74) Representative: Hoffmann Eitle
(86) International application number: PCT/JP2024/013030
(87) International publication number: WO 2024/204706

(57) **Abstract**

Provided is a spectacle lens comprising a lens substrate and multilayer films respectively located on the object side surface and the eyeball side surface of the lens substrate, the spectacle lens having an average reflectance in the wavelength region of 600 to 780 nm on the object side surface of the spectacle lens of 1.9% or more and a luminous reflectance Rv on the eyeball side surface of the spectacle lens of 0.60% or less.

## Description

### Technical Field

The present invention relates to a spectacle lens and spectacles.

### Background Art

A spectacle lens is normally manufactured by forming a functional film for providing a desired function to the spectacle lens on the surface of a lens substrate. As such a functional film, a multilayer film may be provided on the surface of a lens substrate (for example, see PTL 1).

### Citation List

### Patent Literature

PTL 1: Japanese Patent Application Publication No. 2022-106954

### Summary of Invention

### Technical Problem

In recent years, various products featuring various functions have been proposed and sold in the market of spectacle lenses. In order to provide spectacle lenses with higher added values in the market, the spectacle lenses desirably have good wearing comfort.

An object of one aspect of the present invention is to provide a spectacle lens having good wearing comfort.

### [Solution to Problem]

Specific examples of good wearing comfort of a spectacle lens include that a wearer of spectacles with the spectacle lens hardly feels the glare, and that the wearer of the spectacles hardly feels ghost (multiple image) and/or flare (phenomenon that the light source and the surrounding thereof appear as a white cloudy image). The inventor of the present invention has made intensive studies and has found that when a spectacle lens contains a lens substrate and multilayer films respectively located on the object side surface and the object side surface of the lens substrate, and has an average reflectance in the wavelength region of 600 to 780 nm on the object side surface of the spectacle lens of 1.9% or more and a luminous reflectance Rv on the eyeball side surface of the spectacle lens of 0.60% or less, a wearer of spectacles with the spectacle lens hardly notices ghost or flare and hardly notices the glare in the evening.

Thus, an aspect of the present invention is as follows.
[1] A spectacle lens including a lens substrate and multilayer films respectively located on the object side surface and the objective side surface of the lens substrate, the spectacle lens having an average reflectance in the wavelength region of 600 to 780 nm on the object side surface of the spectacle lens of 1.9% or more and a luminous reflectance Rv on the eyeball side surface of the spectacle lens of 0.60% or less.
[2] The spectacle lens according to [1], wherein the average reflectance in the wavelength region of 600 to 780 nm on the object side surface of the spectacle lens is 1.9% or more and 5.0% or less.
[3] The spectacle lens according to [1] or [2], wherein the average reflectance in the wavelength region of 600 to 780 nm on the object side surface of the spectacle lens is 1.9% or more and 3.0% or less.
[4] The spectacle lens according to any of [1] to [3], wherein the luminous reflectance Rv on the eyeball side surface of the spectacle lens is 0.50% or less.
[5] The spectacle lens according to any of [1] to [4], wherein the luminous reflectance Rv on the eyeball side surface of the spectacle lens is 0.40% or less.
[6] The spectacle lens according to any of [1] to [5], wherein the average reflectance in the wavelength region of 600 to 780 nm on the object side surface of the spectacle lens is 1.9% or more and 3.0% or less and the luminous reflectance Rv on the eyeball side surface of the spectacle lens is 0.40% or less.
[7] Spectacles including the spectacle lens according to any of [1] to [6].

### Advantageous Effects of Invention

According to one aspect of the present invention, it is possible to provide a spectacle lens having good wearing comfort. According to one aspect of the present invention, it is possible to provide spectacles including the spectacle lens.

### Brief Description of Drawings

[Fig. 1]

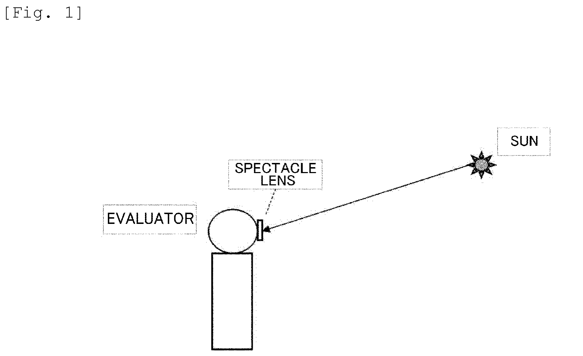

Fig. 1 is a diagram showing the arrangements between a spectacle wearer (evaluator) and the sun when evaluating the wearing comfort of the spectacle lenses of Examples and Comparative Examples.

### Description of Embodiments

Definitions of terms and/or measurement methods of the present invention will be described hereinbelow.

The "object side surface" is the surface positioned on the object side when spectacles having spectacle lenses are worn by a wearer. The "eyeball side surface" is the surface on the other side, namely the surface positioned on the eyeball side when spectacles having spectacle lenses are worn by a wearer.

The reflectance measured for a surface of the spectacle lens is the reflectance for light that enters normally with respect to the surface. The measurement of the reflectance can be made, for example, at a pitch of 1 to 5 nm. The average reflectance in a certain wavelength region is an arithmetic average of the reflectance values determined in that wavelength region. Accordingly, the average reflectance in the wavelength region of 600 to 780 nm on the object side surface of the spectacle lens is the arithmetic average of the reflectance values determined in the wavelength region of 600 to 780 nm. With respect to the angle of incidence of light that enters the surface to be measured, the angle of incidence of the normal incident light is strictly 0°. However, from the viewpoint of the measuring optical system, depending on the reflectometer, the normal incident light used may be incident light having an angle of incidence of about 0° to 5°. Such cases are also included in the "normal incidence" according to the present invention and in the present specification. In addition, some reflectometer may be affected by multiple reflection between the surface to be measured and an opposing surface. In such a case, multiple reflection may be suppressed by applying a treatment (for example, a black coating treatment) for absorbing or scattering a light beam to the opposing surface.

The "luminous reflectance Rv" is the value measured according to JIS T 7334: 2011. The luminous reflectance Rv measured for the eyeball side surface of a spectacle lens is the luminous reflectance determined for light that enters normally with respect to the surface. The normal incident light is as described above.

The "film thickness" as used herein is a physical film thickness. The film thickness can be determined by a well-known film thickness measurement method. For example, the film thickness can be determined by converting the optical film thickness measured with an optical film thickness measuring device into the physical film thickness.

### [Spectacle Lens]

Hereinafter, a spectacle lens according to one aspect of the present invention will be described in greater detail.

### <Average Reflectance in the Wavelength Region of 600 to 780 nm on the Object Side Surface of the Spectacle Lens>

The spectacle lens has an average reflectance in the wavelength region of 600 to 780 nm on the object side surface of the spectacle lens of 1.9% or more. Scattered light during the daytime is dominated by visible light having short wavelength. On the other hand, the evening sunlight is dominated by light having long wavelength, and thus scattered light thereof is also dominated by light having long wavelength. The object side surface of the above spectacle lens has an average reflectance for visible light having long wavelength as high as 1.9% or more, and thus the degree of the glare of the scattered light of the evening sun felt by the wearer of spectacles provided with the spectacle lens can be reduced. From the viewpoint of further reducing the glare felt by the wearer of the spectacles in the evening, the average reflectance in the wavelength region of 600 to 780 nm on the object side surface of the spectacle lens is preferably 2.0% or more and more preferably 2.1% or more. The average reflectance in the wavelength region of 600 to 780 nm on the object side surface of the spectacle lens can be, for example, 5.0% or less, 4.5% or less, 4.0% or less, 3.5% or less, 3.0% or less, 2.9% or less or 2.8% or less. The glare felt by the wearer of the spectacles in the evening can be reduced more as the average reflectance is higher, hence the average reflectance may be above the above-mentioned range.

The spectacle lens may have an average reflectance in the wavelength region of 600 to 780 nm on the eyeball side surface within the above range or outside the above range.

### <Luminous Reflectance Rv of the Eyeball Side Surface of the Spectacle Lens>

The spectacle lens further has a luminous reflectance Rv on the eyeball side surface of the spectacle lens of 0.60% or less. The fact that the eyeball side surface of the spectacle lens is a low-reflective surface may contribute to the wearer of the spectacles hardly noticing ghost or flare. For example, because the sun is at a lower angle in the evening than in the daytime, flare tends to be more noticeable. However, the spectacle lens may contribute to the wearer of the spectacles hardly noticing flare in the evening. As described above, the fact that the spectacle lens has a luminous reflectance Rv on the eyeball side surface of the spectacle lens of 0.60% or less can lead to improved wearing comfort of the spectacle lens. From the viewpoint of further improving the wearing comfort of the spectacle lens, the luminous reflectance Rv on the eyeball side surface of the spectacle lens is preferably 0.50% or less and more preferably 0.40% or less. The luminous reflectance Rv on the eyeball side surface of the spectacle lens can be, for example, 0.05% or more or 0.10% or more. From the viewpoint of improving the wearing comfort of the spectacle lens, it is preferable that the luminous reflectance Rv on the eyeball side surface of the spectacle lens is low. Accordingly, the luminous reflectance Rv on the eyeball side surface of the spectacle lens may be below the above range.

The spectacle lens may have a luminous reflectance Rv on the object side surface within the above range or outside the above range.

The above various physical properties measured on the object side surface and the eyeball side surface of the spectacle lens can be adjusted by, for example, design of multilayer films provided on both surfaces of the spectacle lens. The multilayer film design can be decided by, for example, optical simulation based on a known method.

### <Lens Substrate>

The lens substrate of the spectacle lens can be a plastic lens substrate or a glass lens substrate. For example, the glass lens substrate can be a lens substrate made of inorganic glass. The lens substrate is preferably a plastic lens substrate because it is light weight and hard to break. Examples of plastic lens substrate may include (meth)acrylic resins, styrene resins, polycarbonate resins, allyl resins, allyl carbonate resins such as diethylene glycol bisallyl carbonate resins (CR-39), vinyl resins, polyester resins, polyether resins, urethane resins obtained by reacting an isocyanate compound and a hydroxy compound such as diethylene glycol, thiourethane resins obtained by reacting an isocyanate compound and a polythiol compound, and cured products (generally referred to as transparent resins) obtained by curing a curable composition containing a (thio)epoxy compound having one or more disulfide bonds in the molecule. The curable composition can also be referred to as a polymerizable composition. The lens substrate may contain a known additive. Examples of the additive may include an ultraviolet absorber. The lens substrate containing an ultraviolet absorber can reduce the amount of ultraviolet light entering from the object side surface and then entering the eye of a wearer of the spectacles.

As the lens substrate, an undyed substrate (colorless lens) may be used or a dyed substrate (dyed lens) may be used. The refractive index of the lens substrate may be, for example, about 1.50 to 1.75. However, the refractive index of the lens substrate is not limited to the above range, and may be within the above range or may be above or below outside of the above range. In the present invention and this specification, the refractive index is a refractive index for light having a wavelength of 500 nm. In addition, the lens substrate may be a lens with optical power (so-called prescription lens) or a lens without optical power (so-called non-prescription lens).

This spectacle lens can be various lenses including a monofocal lens, a multifocal lens and a progressive power lens. The type of the lens is normally determined by the surface shapes of both surfaces of the lens substrate. The surface of the lens substrate may be a convex surface, a concave surface, or a flat surface. In normal lens substrates and spectacle lenses, the object side surface is a convex surface, and the eyeball side surface is a concave surface. However, the present invention is not limited thereto.

### <Multilayer Film>

The spectacle lens has multilayer films respectively on the object side surface and the eyeball side surface of the lens substrate.

The multilayer film located on the object side surface of the lens substrate and the multilayer film located on the eyeball side surface may be the same or different.

The multilayer film may be located directly on the surface of the lens substrate or indirectly on the surface of the lens substrate via one or more other layers. Examples of the layer that can be formed between the lens substrate and the multilayer film may include a polarizing layer, a light control layer and a hard coat layer. By providing the hard coat layer, the durability (strength) of the spectacle lens can be enhanced. The hard coat layer may be, for example, a cured layer generated by curing a curable composition. For the details on the hard coat layer, see, for example, paragraphs [0025] to [0028] and [0030] of Japanese Patent Application Publication No. 2012-128135. In addition, a primer layer for improving adhesion may be formed between the lens substrate and the multilayer film. For the details on the primer layer, see, for example, paragraphs [0029] and [0030] of Japanese Patent Application Publication No. 2012-128135.

For the method of forming the multilayer film, a known film forming method can be used. In terms of ease of film formation, it is preferable to form the film by deposition. In other words, it is preferable that each layer in the multilayer film is a deposition film. The deposition film refers to a film formed by deposition. In the present invention and this description, "deposition" includes a dry method such as a vacuum deposition method, an ion plating method and a sputtering method. In the case of the vacuum deposition method, an ion beam assisted method, in which an ion beam is irradiated while deposition is being performed may be used.

The multilayer film may have a stacked structure of alternating layers of high refractive index layers and low refractive index layers. In the present invention and the present description, "high" and "low" of "high refractive index" and "low refractive index" are relative terms. That is, a high refractive index layer means a layer having a higher refractive index than a low refractive index layer included in the same multilayer film. In other words, a low refractive index layer means a layer having a lower refractive index than a high refractive index layer included in the same multilayer film. The refractive index of the high refractive index layer can be, for example, not smaller than 1.60 (for example, in the range of 1.60 to 2.40), and the refractive index of the low refractive index layer can be, for example, not larger than 1.59 (for example, in the range of 1.37 to 1.59). However, as mentioned above, the terms "high" and "low" in the phrases of high refractive index and low refractive index indicate relative magnitude; hence, the refractive index of the high refractive index material and that of the low refractive index material are not limited to the ranges mentioned above. The multilayer film may include three or more layers having different refractive indices.

A high refractive index material constituting the high refractive index layer and a low refractive index material constituting the low refractive index layer may respectively be an inorganic material, an organic material or an inorganic/organic composite material and is preferably an inorganic material from the viewpoint of film-forming properties and the like. That is, the multilayer film is preferably an inorganic multilayer film. Specifically, examples of the high refractive index material for forming the high refractive index layer may include one or a mixture of two or more oxides selected from the group consisting of zirconium oxides (such as ZrO₂), tantalum oxides (Ta₂O₅), titanium oxides (such as TiO₂), aluminum oxides (Al₂O₃), yttrium oxides (such as Y₂O₃), hafnium oxides (such as HfO₂) and niobium oxides (such as Nb₂O₅). Examples of the low refractive index material for forming the low refractive index layer may include one or a mixture of two or more oxides or fluorides selected from the group consisting of silicon oxides (such as SiO₂), magnesium fluorides (such as MgF₂) and barium fluorides (such as BaF₂). In these examples, the oxides and fluorides are indicated by stoichiometric compositions for the sake of simplicity, but the oxides and fluorides including oxygen or fluorine in an amount less than or more than the stoichiometric amount may also be used for the high refractive index material or the low refractive index material.

Preferably, the high refractive index layer is a film containing the high refractive index material as a main component, and the low refractive index layer is a film containing the low refractive index material as a main component. The main component as used herein is the component that accounts for the most proportion of the film, and is the component that usually accounts for about 50% by mass to 100% by mass, and even about 90% by mass to 100% by mass relative to the mass of the film. The film (such as a deposition film) can be formed by performing film formation using a film forming material (such as a deposition source) containing the high refractive index material or the low refractive index material as a main component. The same as above applies to the main component with respect to the film forming material. In some cases, the film or the film forming material contains unavoidable impurities. The film or the film forming material may contain other components such as inorganic substances and known additives to assist in film forming within a range of not diminishing the function of the main component. Film formation can be performed by a known film formation method, and from the viewpoint of ease of film formation, vapor deposition is preferably used.

The multilayer film can be, for example, a multilayer film in which a total of 3 to 10 of high refractive index layers and low refractive index layers are alternately laminated. The film thickness of the high refractive index layer and the film thickness of the low refractive index layer can be decided according to the layer configuration. Specifically, the combination of the layers to be included in the multilayer film and the film thickness of each layer can be decided by optical simulation by a known method based on the refractive indices of the film forming materials for forming the high refractive index layer and the low refractive index layer and the physical properties wished to be imparted to the spectacle lens by providing the multilayer film.

Examples of the layer configuration of the multilayer film may include, in the direction from the lens substrate side to the lens outermost surface side: the configuration stacked in the order of first layer (low refractive index layer)/second layer (high refractive index layer)/third layer (low refractive index layer)/fourth layer (high refractive index layer)/fifth layer (low refractive index layer)/sixth layer (high refractive index layer)/seventh layer (low refractive index layer); and the configuration stacked in the order of first layer (low refractive index layer)/second layer (high refractive index layer)/third layer (low refractive index layer)/fourth layer (high refractive index layer)/fifth layer (low refractive index layer)/sixth layer (high refractive index layer)/seventh layer (low refractive index layer)/eighth layer (high refractive index layer)/ninth layer (low refractive index layer). Examples also may include the configuration where the first layer is a high refractive index layer, the configuration including three layers having different refractive indices (high refractive index layer, low refractive index layer, and a layer (medium refractive index layer) having a refractive index lower than that of the high refractive index layer and higher than that of the low refractive index layer).

In these examples of layer configurations, the symbol "/" includes both the case where the layer to the left of "/" and the layer to the right of "/" are directly in contact, and the case where a conductive oxide layer described later exists between the layer to the left of "/" and the layer to the right of "/".

Preferred examples of the combination of the low and high refractive index layers in the multilayer film may include a combination of a layer containing silicon oxide as a main component (silicon oxide layer; low refractive index layer) and a layer containing zirconium oxide as a main component (zirconium oxide layer; high refractive index layer). Examples may further include a combination of a layer containing silicon oxide as a main component (silicon oxide layer; low refractive index layer) and a layer containing niobium oxide as a main component (niobium oxide layer; high refractive index layer). Examples may also include a combination of a layer containing silicon oxide as a main component (silicon oxide layer; low refractive index layer) and a layer containing tantalum oxide as a main component (tantalum oxide layer; high refractive index layer). Examples may further include a combination of a layer containing silicon oxide as a main component (silicon oxide layer; low refractive index layer) and a layer containing titanium oxide as a main component (titanium oxide layer; high refractive index layer). Examples of the multilayer film include multilayer films including at least one laminated structure in which two layers of the above combinations are directly in contact or a conductive oxide layer described later exists between two layers of the above combinations. Preferred examples may also include multilayer films having the above combinations of the low and high refractive index layers and also including an aluminum oxide layer as a medium refractive index layer.

The film thickness of each layer of the high refractive index layers and the low refractive index layers in the multilayer film can be, for example, 3 to 500 nm, and the total thickness of the multilayer film can be, for example, 100 to 900 nm.

In addition to the above-mentioned high refractive index layer and the low refractive index layer, the multilayer film may, in an arbitrary position of the multilayer film, include at least one layer of which main component is a conductive oxide (conductive oxide layer), preferably a deposition film of a conductive oxide which is formed by deposition using a deposition source of which main component is the conductive oxide. The same as above applies to the main component described with respect to the conductive oxide layer.

The conductive oxide layer is preferably a tin-doped indium oxide (ITO) layer having a thickness of 10 nm or less, a tin oxide layer having a thickness of 10 nm or less, and a titanium oxide layer having a thickness of 10 nm or less from the viewpoint of transparency of the spectacle lens. The tin-doped indium oxide (ITO) layer is a layer containing ITO as a main component. The same applies to the tin oxide layer and the titanium oxide layer. By including the conductive oxide layer in the multilayer film, charging of the spectacle lens and sticking of dust to the spectacle lens can be prevented. In the present invention and the present description, a tin-doped indium oxide (ITO) layer having a thickness of 10 nm or less, a tin oxide layer having a thickness of 10 nm or less and a titanium oxide layer having a thickness of 10 nm or less are not considered as the "high refractive index layer" and "low refractive index layer" included in the multilayer film. In other words, even if one or more of these layers are included in the multilayer film, these layers are not regarded as the "high refractive index layer" or "low refractive index layer". The film thickness of the conductive oxide layer having a thickness of 10 nm or less may be, for example, 0.1 nm or more.

Another functional film may be formed on the multilayer film. Such a functional film may be various functional films such as a water repellent or hydrophilic anti-fouling film and anti-fogging film. A known technique can be applied for these functional films.

### [Spectacles]

Another aspect of the present invention relates to spectacles having the spectacle lens according to the above-mentioned aspect of the present invention. Details of the spectacle lens included in the spectacles are as described above. By including the spectacle lens in the spectacles, good appearance can be provided. The configuration of the spectacles such as a frame is not especially limited, and a known technique may be applied.

### Examples

Hereinafter, the present invention will be described in more detail with reference to examples. However, the present invention is not limited to embodiments shown in Examples.

### [Examples 1 to 9]

On a hard-coated concave surface (eyeball side) of a plastic lens substrate (colorless lens, refractive index: 1.5 or 1.7) of which surfaces were optically finished and hard coated and having a convex object side surface and a concave eyeball side surface, a multilayer deposition film having the layer configuration indicated in Table 1 was formed by ion assisted deposition using oxygen gas and nitrogen gas as assist gas.

On the hard-coated convex surface (object side), a multilayer deposition film having the layer configuration indicated in Table 1 was formed by ion assisted deposition under the same conditions.

In each Example, the multilayer deposition film was formed by stacking, from the lens substrate side (hard coat side) to the spectacle lens surface side, the first layer, the second layer and so on in this order by sequentially using deposition sources indicated in Table 1 in order from the bottom to the top so that the outermost layer on the spectacle lens surface side was the layer formed with the deposition source indicated at the top column of Table 1. In the Examples, the deposition sources containing the oxides indicated in Table 1 excluding impurities that could be unavoidably contaminated were used, and each layer having the thickness indicated in Table 1 was sequentially formed.

Accordingly, the spectacle lenses of Examples 1 to 9 were obtained.

**[Table 1]**

| | Film thickness (nm) | | | | | | | | |
|---|---|---|---|---|---|---|---|---|---|
| | Lens substrate (refractive index: 1.5) | | | | Lens substrate (refractive index : 1.7) | | | | |
| | Example 1 | Example 2 | Example 3 | Example 4 | Example 5 | Example 6 | Example 7 | Example 8 | Example 9 |
| 10th layer SiO₂ | 83.7 | 83.3 | 83.9 | 84.8 | 86.1 | 84.8 | 88.5 | 83.6 | 89.0 |
| 9th layer ITO | 5.0 | 5.0 | 5.0 | 5.0 | 5.0 | 5.0 | 5.0 | 5.0 | 5.0 |
| 8th layer ZrO₂ | 66.3 | 60.3 | 58.5 | 61.6 | 48.8 | 46.0 | 46.3 | 60.8 | 48.2 |
| 7th layer SiO₂ | 14.2 | 12.9 | 13.2 | 13.0 | 16.5 | 12.8 | 16.4 | 9.2 | 17.3 |
| 6th layer ZrO₂ | 28.8 | 29.7 | 33.0 | 31.2 | 30.8 | 28.7 | 32.6 | 24.8 | 32.7 |
| 5th layer SiO₂ | 40.1 | 40.4 | 44.4 | 40.4 | 37.3 | 27.9 | 36.9 | 23.8 | 38.8 |
| 4th layer ZrO₂ | 6.3 | 6.1 | 7.2 | 7.1 | 6.8 | 10.5 | 9.7 | 12.0 | 8.5 |
| 3rd layer SiO₂ | 372.1 | 307.3 | 441.2 | 447.0 | 353.1 | 354.4 | 519.8 | 371.2 | 508.6 |
| 2nd layer ZrO₂ | 1.8 | 3.1 | 3.0 | 1.5 | 5.7 | 6.1 | 8.1 | 7.9 | 7.4 |
| 1st layer SiO₂ | 35.4 | 30.6 | 29.9 | 29.9 | 39.4 | 39.1 | 36.0 | 35.9 | 33.1 |

### [Comparative Example 1]

The spectacle lens of Comparative Example 1 is a spectacle lens having multilayer films of the following layer configuration respectively on the convex surface side (object side) and the concave surface side (eyeball side).

**[Table 2]**

| | Film thickness (nm) |
|---|---|
| | Lens substrate refractive index : 1.6) |
| | Comparative Example 1 |
| 8th layer SiO₂ | 105 |
| 7th layer ITO | 5 |
| 6th layer ZrO₂ | 25 |
| 5th layer SiO₂ | 57 |
| 4th layer ZrO₂ | 12 |
| 3rd layer SiO₂ | 352 |
| 2nd layer ZrO₂ | 1 |
| 1st layer SiO₂ | 45 |

### [Comparative Example 2]

The spectacle lens of Comparative Example 2 is a spectacle lens having multilayer films of the following layer configuration respectively on the convex surface side (object side) and the concave surface side (eyeball side).

**[Table 3]**

| | Film thickness (nm) |
|---|---|
| | Lens substrate (refractive index: 1. 6) |
| | Comparative Example 2 |
| 10th layer SiO₂ | 86 |
| 9th layer ITO | 5 |
| 8th layer ZrO₂ | 50 |
| 7th layer SiO₂ | 11 |
| 6th layer ZrO₂ | 40 |
| 5th layer SiO₂ | 40 |
| 4th layer ZrO₂ | 7 |
| 3rd layer SiO₂ | 394 |
| 2nd layer ZrO₂ | 3 |
| 1st layer SiO₂ | 34 |

### [Measurements of Physical Properties on the Object Side Surface of the Spectacle Lens]

### <Luminous Reflectance Rv on the Eyeball Side Surface>

Normal incident reflection spectral characteristics at the optical center were measured on the eyeball side surface of each of the spectacle lenses of the Examples and the Comparative Examples. Measurements were performed using a lens reflectometer USPM-RU (measurement pitch: 1 nm, measurement conditions set to normal incidence) manufactured by Olympus Corporation.

From the normal incident reflection spectral characteristics measured as above, the luminous reflectance Rv on the eyeball side surface was determined according to JIS T 7334:2011.

### <Average Reflectance in the Wavelength Region of 600 to 780 nm on the Object Side Surface of the Spectacle Lens>

Normal incident reflection spectral characteristics at the optical center were measured on the object side surface of each of the spectacle lenses of the Examples and the Comparative Examples. Measurements were performed using a lens reflectometer USPM-RU (measurement pitch: 1 nm, measurement conditions set to normal incidence) manufactured by Olympus Corporation.

From the normal incident reflection spectral characteristics measured as above, the average reflectance in the wavelength region of 600 to 780 nm on the object side surface was determined.

Since the spectacle lenses of Examples 1 to 9 and Comparative Examples 1 and 2 respectively have the same multilayer film on either side, the physical properties measured on the object side surface are the same as those measured on the eyeball side surface, and the physical properties measured on the eyeball side surface are the same as those measured on the object side surface.

**[Table 4]**

| | | Example 1 | Example 2 | Example3 | Example 4 | Example 5 | Example 6 | Example 7 | Example 8 | Example 9 | Comparative Example 1 | Comparative Example 2 |
|---|---|---|---|---|---|---|---|---|---|---|---|---|
| Object side surface | Average reflectance (%) 600-780nm | 2.1 | 2.8 | 2.1 | 1.9 | 2.0 | 2.4 | 2.1 | 2.0 | 2.1 | 2.6 | 1.5 |
| Eyeball side surface | Rv (%) | 0.29 | 0.30 | 0.34 | 0.27 | 0.35 | 0.34 | 0.36 | 0.29 | 0.36 | 0.67 | 0.33 |

### [Evaluation of Wearing Comfort]

Fig. 1 is a diagram showing the arrangements between a spectacle wearer (evaluator) and the sun when evaluating the wearing comfort.

Spectacles respectively provided with the spectacle lenses of Example 1, Comparative Example 1 and Comparative Example 2 were prepared.

In the evening, an evaluator wearing the spectacles was asked to see the evening sun light with care and the sensory evaluation by the evaluator was performed. Ten evaluators were used, and each evaluated "Evaluation item 1: Glare" and "Evaluation item 2: Ghost and/or flare". For the "Evaluation item 1: Glare", scores were given in five grades: 5 points: not glaring, 4 points: slightly glaring, 3 points: more glaring than 4-point, 2 points: more glaring than 3-point, and 1 point: more glaring than 2-point. For "Evaluation item 2: Ghost and/or flare", scores were given in five grades: 5 points: no flare or ghost, 4 points: slightly noticeable ghost and/or flare, 3 points: more noticeable than 4-point, 2 points: more noticeable than 3-point, and 1 point: more noticeable than 2-point. Table 5 indicates the scores given by 10 evaluators. Table 6 shows the arithmetic means of the scores of evaluation items 1 and 2, and the arithmetic means (overall means) of the scores of both evaluation items with respect to the scores given by 10 evaluators. It can be said that the higher the score shown in Table 6, the better the wearing comfort of the spectacle lens.

**[Table 5]**

| | Evaluator 1 | | | Evaluator 2 | | | Evaluator 3 | | | Evaluator 4 | | | Evaluator 5 | | |
|---|---|---|---|---|---|---|---|---|---|---|---|---|---|---|---|
| | Example 1 | Comparative Example 1 | Comparative Example 2 | Example 1 | Comparative Example 1 | Comparative Example 2 | Example 1 | Comparative Example 1 | Comparative Example 2 | Example 1 | Comparative Example 1 | Comparative Example 2 | Example 1 | Comparative Example 1 | Comparative Example 2 |
| Evaluation item 1 | 3 | 3 | 1 | 3 | 3 | 2 | 2 | 1 | 2 | 3 | 3 | 2 | 2 | 1 | 1 |
| Evaluation item 2 | 4 | 3 | 4 | 4 | 4 | 3 | 5 | 5 | 5 | 5 | 3 | 5 | 5 | 4 | 4 |

| | Evaluator 6 | | | Evaluator 7 | | | Evaluator 8 | | | Evaluator 9 | | | Evaluator 10 | | |
|---|---|---|---|---|---|---|---|---|---|---|---|---|---|---|---|
| | Example 1 | Comparative Example 1 | Comparative Example 2 | Example 1 | Comparative Example 1 | Comparative Example 2 | Example 1 | Comparative Example 1 | Comparative Example 2 | Example 1 | Comparative Example 1 | Comparative Example 2 | Example 1 | Comparative Example 1 | Comparative Example 2 |
| Evaluation item 1 | 4 | 3 | 3 | 4 | 3 | 3 | 4 | 5 | 3 | 4 | 4 | 2 | 4 | 4 | 2 |
| Evaluation item 2 | 5 | 3 | 4 | 5 | 5 | 5 | 5 | 5 | 5 | 5 | 4 | 5 | 5 | 4 | 4 |

**[Table 6]**

| | Arithmetic mean | | |
|---|---|---|---|
| Sensory evaluation | Example 1 | Comparative Example 1 | Comparative Example 2 |
| Evaluation item 1 | 3.3 | 3.0 | 2.1 |
| Evaluation item 2 | 4.8 | 4.0 | 4.4 |
| Overall mean | 4.1 | 3.5 | 3.3 |

From the above results, it can be confirmed that controlling the average reflectance in the wavelength region of 600 to 780 nm on the object side surface and the luminous reflectance Rv on the eyeball side surface within the ranges described above contributes to the improvement of the wearing comfort of the spectacle lens.

Various aspects disclosed in this description may be combined in any combination of two or more.

The embodiments disclosed herein are only examples in all respects and should not be considered as restrictive. The scope of the present invention is not limited to the above description, but is defined by the scope of claims, and is intended to encompass equivalents to the scope of claims and all modifications within the scope of the claims.

### Industrial Applicability

The present invention is useful in the manufacturing fields of spectacle lenses and spectacles.

## Claims

1. A spectacle lens comprising a lens substrate and multilayer films respectively located on the object side surface and the object side surface of the lens substrate, the spectacle lens having an average reflectance in the wavelength region of 600 to 780 nm on the object side surface of the spectacle lens of 1.9% or more and a luminous reflectance Rv on the eyeball side surface of the spectacle lens of 0.60% or less.

2. The spectacle lens according to claim 1, wherein the average reflectance in the wavelength region of 600 to 780 nm on the object side surface of the spectacle lens is 1.9% or more and 5.0% or less.

3. The spectacle lens according to claim 1, wherein the average reflectance in the wavelength region of 600 to 780 nm on the object side surface of the spectacle lens is 1.9% or more and 3.0% or less.

4. The spectacle lens according to claim 1, wherein the luminous reflectance Rv on the eyeball side surface of the spectacle lens is 0.50% or less.

5. The spectacle lens according to claim 1, wherein the luminous reflectance Rv on the eyeball side surface of the spectacle lens is 0.40% or less.

6. The spectacle lens according to claim 1, wherein the average reflectance in the wavelength region of 600 to 780 nm on the object side surface of the spectacle lens is 1.9% or more and 3.0% or less and the luminous reflectance Rv on the eyeball side surface of the spectacle lens is 0.40% or less.

7. Spectacles comprising the spectacle lens according to any one of claims 1 to 6.
